# EUROPEAN PATENT APPLICATION

(11) **EP 2 543 529 A1**
(43) Date of publication of application: **09.01.2013**
(21) Application number: 11750676.6
(22) Date of filing: 02.03.2011
(51) Int. Cl.: B60H 1/22

(54) **AIR CONDITIONING APPARATUS FOR VEHICLE AND METHOD FOR SWITCHING OPERATION THEREOF**

(30) Priority: 04.03.2010 JP 2010047606
(71) Applicant: Calsonic Kansei Corporation, Saitama-shi Saitama 331-8501 (JP)
(72) Inventor: HOZUMI, Masaru, Saitama-shi Saitama 331-8501 (JP); TAKEI, Toshihiro, Saitama-shi Saitama 331-8501 (JP)
(74) Representative: Grünecker, Kinkeldey, Stockmair & Schwanhäusser
(86) International application number: PCT/JP2011/054707
(87) International publication number: WO 2011/108567

(57) **Abstract**

An vehicular air-conditioner includes a refrigeration cycle including a compressor, an outside condenser, an interior condenser, an evaporator, an expansion valve 7, a bypass-path bypassing the outside condenser, a cooling circulation path that circulates refrigerant through the outside condenser 4, a heating circulation path that circulates refrigerant through the bypass-path 11, and a flowpath changeover valve that changes a refrigerant circulation path to one of the cooling and heating circulation paths, a high-pressure detector that detects a high-pressure-side pressure of the refrigeration cycle, and a controller. The controller controls, upon a changeover command to a heating mode during a cooling mode, the flowpath changeover unit to change the refrigerant circulation path from the cooling circulation path to the heating circulation path after the high-pressure-side pressure detected by the high-pressure detector becomes equal-to/lower-than a target pressure. According to the air-conditioner, the refrigerant amount in the heating circulation path can be optimized without making the refrigeration cycle complicated and increasing its cost.

## Description

### TECHNICAL FIELD

The present invention relates to an air conditioner for a vehicle in which refrigerant is circulated while bypassing an outside heat exchanger in its heating mode, and a method for changing its operating mode.

### BACKGROUND ART

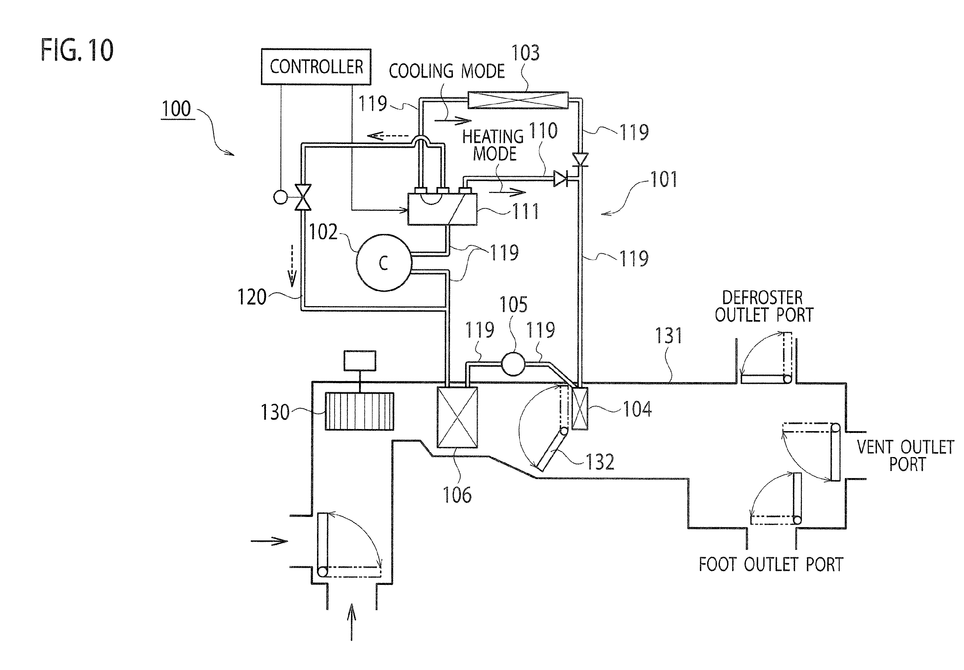

A Patent Document 1 listed below discloses a conventional air conditioner 100 for a vehicle. The air conditioner 100 for a vehicle is provided with a vapor compression refrigeration cycle 101 as shown in Fig. 10. The vapor compression refrigeration cycle 101 includes a compressor 102 for compressing refrigerant, an outside condenser 103 for exchanging heat between the refrigerant and outside air, an interior condenser 104 for exchanging heat between the refrigerant and air to be supplied to a vehicle cabin, an expansion valve 105 for decompressing the refrigerant, and an evaporator 106 for exchanging heat between the refrigerant and the air to be supplied to the vehicle cabin. These components are connected by refrigerant pipes 119.

The evaporator 106 and the interior condenser 104 are housed in an air conditioner case (A/C case) 131 together with a blower fan 130. Air suctioned into the A/C case 131 by the blower fan 130 is cooled at the evaporator 106, then heated at the interior condenser 104 as much as needed by an adjustment of an air mixed door 132, so as to become desired-temperature conditioned air and then supplied to the vehicle cabin.

In addition, the vapor compression refrigeration cycle 101 includes a bypass path 110 for letting the refrigerant supplied from the compressor 102 bypass the outside condenser 103, a flowpath changeover valve 111 for changing over a flow of the refrigerant supplied from the compressor 102 to the outside condenser 103 or to the bypass path 110, and a refrigerant return path 120 for connecting an inlet-port-side pipe of the outside condenser 103 with a low-pressure-side pipe of the compressor 102 with interposing the flowpath changeover valve 111. The flowpath changeover valve 111 communicates an inlet port of the outside condenser 103 with the refrigerant return path 120 when a side of the bypass path 110 is selected.

In the above configuration, when a cooling mode is selected, the flowpath changeover valve 111 is changed over to a side of the outside condenser 103. According to this, the refrigerant compressed by the compressor 102 circulates along a cooling circulation path passing through the outside condenser 103, the interior condenser 104, the expansion valve 105, and the evaporator 106. The high-temperature and high-pressure refrigerant compressed by the compressor 102 radiates heat to air at the outside condenser 103 and the interior condenser 104, and absorbs heat from air at the evaporator 106. Therefore, air blowing through the A/C case 131 is cooled by the evaporator 106, and then partially or entirely heated by the interior condenser 104 to be conditioned as desired-temperature cool air.

On the other hand, when a heating mode is selected, the flowpath changeover valve 111 is changed over to a side of the bypass path 110. According to this, the refrigerant compressed by the compressor 102 circulates along a heating circulation path passing through the bypass path 110, the interior condenser 104, the expansion valve 105 and the evaporator 106. The high-temperature and high-pressure refrigerant compressed by the compressor 102 radiates heat to air only at the interior condenser 104, and absorbs heat from air at the evaporator 106. Since heat is radiated only at the interior condenser 104, larger heating energy is radiated compared to that in the cooling circulation path. Therefore, air blowing through the A/C case 131 is cooled by the evaporator 106, and then heated by the interior condenser 104 to be conditioned as desired-temperature warm air.

In this manner, the above-explained conventional air conditioner 100 for a vehicle cools air to be supplied to the vehicle cabin using cold energy obtained from the vapor compression refrigeration cycle 101 when cooling the vehicle cabin, and heats air to be supplied to the vehicle cabin using heating energy obtained from the vapor compression refrigeration cycle 101 when heating the vehicle cabin.

In addition, when changed from a cooling mode to a heating mode, the refrigerant resides in the interior condenser 103 (refrigerant stagnation) since the interior condenser 103 is excluded from the circulation path of the refrigerant. However, this residual refrigerant is circulated to the heating circulation path through the refrigerant return path 120. As a result, refrigerant shortage in the heating refrigerant circulation path can be prevented.

Here, capacity of the outside condenser (outside heat exchanger) 103 is made extremely larger than capacity of the evaporator (interior heat exchanger) 106 and capacity of the interior condenser (interior heat exchanger) 104 in order to get sufficient heat radiation performance (cooling performance) in a high temperature state. Therefore, there is a high possibility that an extremely large amount of the refrigerant may reside in the outside condenser 103. Therefore, there is a high possibility that refrigerant shortage may occur in the heating circulation path. In the above-explained conventional air conditioner 100 for a vehicle, a refrigerant amount in the heating circulation path is optimized by providing the refrigerant return path 120.

### Prior Art Document

### Patent Document

Patent Document 1: Japanese Patent Application Laid-Open No. H9-109669

### SUMMARY OF INVENTION

However, in the above-explained conventional air conditioner 100 for a vehicle, it is needed to provide the refrigerant return path 120 in the vapor compression refrigeration cycle 101. Therefore, configuration of the vapor compression refrigeration cycle 101 must be complicated and increase its cost.

An object of the present invention is to provide an air conditioner for a vehicle that can optimize a refrigerant amount in its heating circulation path without making its vapor compression refrigeration cycle complicated and increasing its cost.

A first aspect of the present invention provides an air conditioner for a vehicle that includes a refrigeration cycle that provided with a compressor that compresses refrigerant, an outside heat exchanger that exchanges heat between refrigerant and outside air, an interior heat exchanger that exchanges heat between refrigerant and air to be supplied to a vehicle cabin, a pressure reducer that decompresses refrigerant compressed by the compressor, a bypass path that bypasses the outside heat exchanger, a cooling circulation path that circulates refrigerant compressed by the compressor through the outside heat exchanger, a heating circulation path that circulates refrigerant compressed by the compressor through the bypass path, and a flowpath changeover unit that changes over a refrigerant circulation path to one of the cooling circulation path and the heating circulation path; a high-pressure detector that detects a high-pressure-side pressure of the refrigeration cycle; and a controller operable to, upon a changeover command to a heating mode during a cooling mode, control the flowpath changeover unit so as to change over the refrigerant circulation path from the cooling circulation path to the heating circulation path after the high-pressure-side pressure detected by the high-pressure detector becomes equal-to or lower-than a target pressure.

According to the first aspect, when changing over from the cooling mode to the heating mode, the flowpath is changed over to the heating circulation path after the high-pressure-side pressure of the refrigeration cycle has become equal-to or lower-than the target pressure. Here, there is correlation between the high-pressure-side pressure of the refrigeration cycle and the refrigerant amount resided in the outside heat exchanger and so on, so that the target pressure is an estimated pressure by which the refrigerant amount could be ensured appropriately after the refrigerant amount resided in the outside heat exchanger and so on (the residual refrigerant amount) is withheld. According to this, it is not needed in the refrigeration cycle to provide the conventional refrigerant return path. As a result, the refrigerant amount in the heating circulation path can be optimized without making the refrigeration cycle complicated and increasing its cost.

It is preferable that the controller is operable to, upon a changeover command to a heating mode during a cooling mode, compare the high-pressure-side pressure detected by the high-pressure detector with the target pressure and, when the high-pressure-side pressure is higher than the target pressure, execute a pressure reduction control for reducing the high-pressure-side pressure.

According to this, the high-pressure-side pressure can be quickly reduced to equal-to or lower-than the target pressure when the high-pressure-side pressure is higher than the target pressure, so that the refrigerant amount in the heating circulation path can be quickly optimized.

Here, it is preferable that the pressure reduction control is a control for increasing an air blow volume to the outside heat exchanger.

According to this, the reduction of the high-pressure-side pressure can be addressed by controlling the air blow volume.

Alternatively, it is preferable that the pressure reduction control is a control for reducing a refrigerant discharge amount of the compressor.

According to this, the reduction of the high-pressure-side pressure can be addressed by controlling the compressor.

Alternatively, it is preferable that the pressure reduction control is a control for diminishing a pressure reduction degree of the pressure reducer.

According to this, the reduction of the high-pressure-side pressure can be addressed by controlling the pressure reducer.

Alternatively, it is preferable that the refrigeration cycle includes an interior condenser and an evaporator that are served as the interior heat exchanger, and an air mix door that adjusts a mixture degree of conditioned air cooled by the evaporator and conditioned air heated by the interior condenser, and the pressure reduction control is a control for increasing an air blow volume to the outside heat exchanger when the air mix door is set to a full-cool position that achieves the mixture degree with as much as the conditioned air cooled by the evaporator, and a control for reducing a refrigerant discharge amount of the compressor when the air mix door is not positioned at the full-cool position.

According to this, a passenger can feel drive change of the compressor when the air mix door is set to the full-cool position. On the other hand, when the air mix door is not set to the full-cool position, a passenger hardly feels drive change of the compressor, and thereby no negative effect is given to the passenger.

In addition, it is preferable that the refrigeration cycle includes an outside condenser served as the outside heat exchanger, and an interior condenser and an evaporator that are served as the interior heat exchanger, the cooling circulation path circulates refrigerant discharged from the compressor through the interior condenser, the outside condenser, the pressure reducer and the evaporator, and the heating circulation path circulates refrigerant discharged from the compressor through the interior condenser, the bypass path, the pressure reducer and the evaporator.

According to this, desired-temperature conditioned air can be generated by utilizing cooling by the evaporator and heating by the interior condenser in the cooling and heating modes.

Alternatively, it is preferable that the refrigeration cycle includes an outside condenser served as the outside heat exchanger, and the interior heat exchanger concurrently functions as an interior condenser and an evaporator, the cooling circulation path circulates refrigerant discharged from the compressor through the outside condenser, the pressure reducer and the interior heat exchanger that functions as the evaporator, and the heating circulation path circulates refrigerant discharged from the compressor through the bypass path, the pressure reducer and the interior heat exchanger that functions as the interior condenser.

According to this, desired-temperature conditioned air can be generated by utilizing cooling by the interior heat exchanger that functions as the evaporator in the cooling mode and by utilizing heating by the interior heat exchanger that functions as the interior condenser in the heating mode.

Further, it is preferable that the controller is operable to, upon an activation command with a heating mode, operate a cooling operation by use of the cooling circulation path for a given time, and then change over to a heating operation by use of the heating circulation path.

According to this, upon the activation command with the heating mode, the refrigerant amount resided in the outside heat exchanger and so on is changed to the given amount (an estimated amount by which the refrigerant amount could be ensured appropriately after the residual refrigerant amount of the outside heat exchanger and so on is withheld) by operating the cooling mode for the given time and then it is changed over to the heating operation. Therefore, upon the activation command with the heating mode, the refrigerant amount in the heating circulation path can be surely optimized.

A second aspect of the present invention provides a method for changing over operations of an air conditioner for a vehicle. The air conditioner including a refrigeration cycle that includes a compressor that compresses refrigerant, an outside heat exchanger that exchanges heat between refrigerant and outside air, an interior heat exchanger that exchanges heat between refrigerant and air to be supplied to a vehicle cabin, a pressure reducer that decompresses refrigerant compressed by the compressor, a bypass path that bypasses the outside heat exchanger, a cooling circulation path that circulates refrigerant compressed by the compressor through the outside heat exchanger, a heating circulation path that circulates refrigerant compressed by the compressor through the bypass path, and a flowpath changeover unit that changes over a refrigerant circulation path to one of the cooling circulation path and the heating circulation path; and a high-pressure detector that detects a high-pressure-side pressure of the refrigeration cycle, the method includes: changing over, upon a changeover command to a heating mode during a cooling mode, the refrigerant circulation path from the cooling circulation path to the heating circulation path by the flowpath changeover unit after the high-pressure-side pressure detected by the high-pressure detector becomes equal-to or lower-than a target pressure.

According to the second aspect, when changing over from the cooling mode to the heating mode, the flowpath is changed over to the heating circulation path after the high-pressure-side pressure of the refrigeration cycle has become equal-to or lower-than the target pressure. Here, there is correlation between the high-pressure-side pressure of the refrigeration cycle and the refrigerant amount resided in the outside heat exchanger and so on, so that the target pressure is an estimated pressure by which the refrigerant amount could be ensured appropriately after the refrigerant amount resided in the outside heat exchanger and so on (the residual refrigerant amount) is withheld. According to this, it is not needed in the refrigeration cycle to provide the conventional refrigerant return path. As a result, the refrigerant amount in the heating circulation path can be optimized without making the refrigeration cycle complicated and increasing its cost.

It is preferable that the method further includes: comparing, upon a changeover command to a heating mode during a cooling mode, the high-pressure-side pressure detected by the high-pressure detector with the target pressure; executing a pressure reduction control for reducing the high-pressure-side pressure when the high-pressure-side pressure is higher than the target pressure; and changing over the refrigerant circulation path from the cooling circulation path to the heating circulation path by the flowpath changeover unit after the high-pressure-side pressure becomes equal-to or lower-than a target pressure.

According to this, the high-pressure-side pressure can be quickly reduced to equal-to or lower-than the target pressure when the high-pressure-side pressure is higher than the target pressure, so that the refrigerant amount in the heating circulation path can be quickly optimized.

Here, it is preferable that the pressure reduction control is a control for increasing an air blow volume to the outside heat exchanger.

According to this, the reduction of the high-pressure-side pressure can be addressed by controlling the air blow volume.

Alternatively, it is preferable that the pressure reduction control is a control for reducing a refrigerant discharge amount of the compressor.

According to this, the reduction of the high-pressure-side pressure can be addressed by controlling the compressor.

Alternatively, it is preferable that the pressure reduction control is a control for diminishing a pressure reduction degree of the pressure reducer.

According to this, the reduction of the high-pressure-side pressure can be addressed by controlling the pressure reducer.

Alternatively, it is preferable that the refrigeration cycle includes an interior condenser and an evaporator that are served as the interior heat exchanger, and an air mix door that adjusts a mixture degree of conditioned air cooled by the evaporator and conditioned air heated by the interior condenser, and the pressure reduction control is a control for increasing an air blow volume to the outside heat exchanger when the air mix door is set to a full-cool position that achieves the mixture degree with as much as the conditioned air cooled by the evaporator, and a control for reducing a refrigerant discharge amount of the compressor when the air mix door is not positioned at the full-cool position.

According to this, a passenger can feel drive change of the compressor when the air mix door is set to the full-cool position. On the other hand, when the air mix door is not set to the full-cool position, a passenger hardly feels drive change of the compressor, and thereby no negative effect is given to the passenger.

In addition, it is preferable that the refrigeration cycle includes an outside condenser served as the outside heat exchanger, and an interior condenser and an evaporator that are served as the interior heat exchanger, the cooling circulation path circulates refrigerant discharged from the compressor through the interior condenser, the outside condenser, the pressure reducer and the evaporator, and the heating circulation path circulates refrigerant discharged from the compressor through the interior condenser, the bypass path, the pressure reducer and the evaporator.

According to this, desired-temperature conditioned air can be generated by utilizing cooling by the evaporator and heating by the interior condenser in the cooling and heating modes.

Alternatively, it is preferable that the refrigeration cycle includes an outside condenser served as the outside heat exchanger, and the interior heat exchanger concurrently functions as an interior condenser and an evaporator, the cooling circulation path circulates refrigerant discharged from the compressor through the outside condenser, the pressure reducer and the interior heat exchanger that functions as the evaporator, and the heating circulation path circulates refrigerant discharged from the compressor through the bypass path, the pressure reducer and the interior heat exchanger that functions as the interior condenser.

According to this, desired-temperature conditioned air can be generated by utilizing cooling by the interior heat exchanger that functions as the evaporator in the cooling mode and by utilizing heating by the interior heat exchanger that functions as the interior condenser in the heating mode.

Further, it is preferable that the method further includes: operating, upon an activation command with a heating mode, a cooling operation by use of the cooling circulation path for a given time, and then changing over to a heating operation by use of the heating circulation path.

According to this, upon the activation command with the heating mode, the refrigerant amount resided in the outside heat exchanger and so on is changed to the given amount (an estimated amount by which the refrigerant amount could be ensured appropriately after the residual refrigerant amount of the outside heat exchanger and so on is withheld) by operating the cooling mode for the given time and then it is changed over to the heating operation. Therefore, upon the activation command with the heating mode, the refrigerant amount in the heating circulation path can be surely optimized.

### BRIEF DESCRIPTION OF DRAWINGS

**[****Fig. 1****]** It is a schematic configuration diagram of an air conditioner for a vehicle according to a first embodiment.
**[****Fig. 2****]** It is a flowchart of a transition control from a cooling mode to a heating mode.
**[****Fig. 3****]** It is a flowchart of an activation control in the heating mode.
**[****Fig. 4****]** It is a diagram showing each appropriate range of refrigerant in the cooling mode and the heating mode.
**[****Fig. 5****]** It is a characteristic diagram showing correlation between a residual refrigerant amount in an outside condenser and a high-pressure-side pressure.
**[****Fig. 6****]** It is a characteristic diagram showing relation between an elapsed time of the cooling mode and the refrigerant amount in the outside condenser.
**[****Fig. 7****]** (a) is an explanatory diagram showing a method for calculating an appropriate refrigerant amount in the cooling mode, and (b) is an explanatory diagram showing a method for calculating an appropriate refrigerant amount in the heating mode.
**[****Fig. 8****]** It is an explanatory diagram showing a difference of appropriate refrigerant amount ranges (stable ranges) in the cooling mode and the heating mode.
**[****Fig. 9****]** It is a schematic configuration diagram of an air conditioner for a vehicle according to a second embodiment.
**[****Fig. 10****]** It is a schematic configuration diagram of a conventional air conditioner for a vehicle.

### DESCRIPTION OF EMBODIMENTS

Hereinafter, embodiments of a vane compressor will be explained with reference to the drawings.

### (First Embodiment)

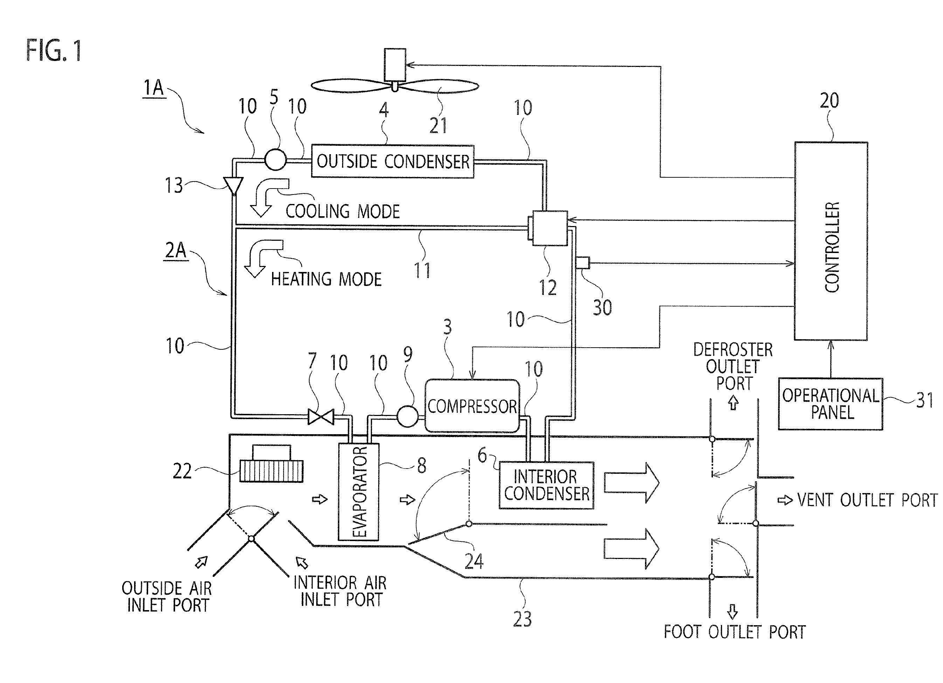

As shown in Fig. 1, an air conditioner 1A for a vehicle according to a first embodiment includes a vapor compression refrigeration cycle 2A. The refrigeration cycle 2A includes a compressor 3 for compressing refrigerant, an outside condenser (outside heat exchanger) 4 for exchanging heat between the refrigerant and outside air, a receiver tank 5 provided downstream from the outside condenser 4, an interior condenser (interior heat exchanger) 6 and an evaporator (interior heat exchanger) 8 for exchanging heat between the refrigerant and air to be supplied to a vehicle cabin, a thermostatic expansion valve (pressure reducer) 7 provided upstream from the evaporator 8 for decompressing the refrigerant, and an accumulator 9 provided downstream from the evaporator 8. Each of these components is connected by refrigerant pipes 10.

The compressor 3 is a vane compressor, for example, and its turning on/off and its rotational speed are controlled based on commands from a controller 20. A refrigerant discharge volume is regulated according to the rotational speed of the compressor 3.

Outside air is blown to the outside condenser 4 by an outside blower fan 21. Rotational speed of the outside blower fan 21 is regulated by the controller 20. Capacity of the outside condenser 4 is made extremely larger than capacity of the evaporator (interior heat exchanger) 8 and capacity of the interior condenser (interior heat exchanger) 6 in order to get sufficient heat radiation performance (cooling performance) in a high temperature state.

The receiver tank 5 temporarily accumulates some of the refrigerant supplied from the outside condenser 4 as surplus refrigerant, and sends only liquid refrigerant to the thermostatic expansion valve 7. The receiver tank 5 is provided integrally with the outside condenser 4.

The thermostatic expansion valve 7 has a feeler bulb (not shown) attached to an outlet side of the evaporator 8. Valve opening of the thermostatic expansion valve 7 is automatically regulated so as to keep superheating degree of the refrigerant on the outlet side of the evaporator 8 at a preset value.

The interior condenser 6 and the evaporator 8 are housed in an A/C case 23 together with a blower fan 22. Suctioned air into the A/C case 23 by the blower fan 22 passes through the evaporator 8, and then branched to a flowpath passing through the interior condenser 6 and a flowpath bypassing the interior condenser 6 by an air mix door 24. Then, the branched two airflows are made confluent again, and supplied into a vehicle cabin as a conditioned air from a defroster outlet, a vent outlet and a foot outlet. A position of the air mix door 24 is controlled by the controller 20.

The accumulator 9 temporarily accumulates some of the refrigerant supplied from the evaporator 8 as surplus refrigerant, and sends only gas refrigerant to the compressor 3.

In addition, the refrigeration cycle 2A includes a bypass path 11 for letting the refrigerant supplied from the compressor 3 bypass the outside condenser 4 and the receiver tank 5, a flowpath changeover valve (flowpath changeover unit) 12 for changing over the refrigerant flow from the compressor 3 to the outside condenser 4 or to the bypass path 11, and a check valve 13. The flowpath changeover valve 12 is provided at a position where an upstream end of the bypass path 11 and the refrigerant pipe 10 are connected with each other. The check valve 13 is disposed downstream from the receiver tank 5 and upstream from a confluent position of the bypass path 11 and the refrigerant pipe 10.

The flowpath changeover valve 12 changes over a refrigerant circulation path to a cooling circulation path passing through the outside condenser 4 or a heating circulation path passing through the bypass path 11. Changeover of the path by the flowpath changeover valve 12 is controlled by the controller 20.

The check valve 13 prevents the refrigerant from flowing back to the outside condenser 4 when the refrigerant circulates along the heating circulation path.

A high-pressure detector 30 is provided in the refrigeration cycle 2A. The high-pressure detector 30 detects a high-pressure-side pressure Pd of the refrigeration cycle 2A. The detected high-pressure-side pressure Pd is output to the controller 20.

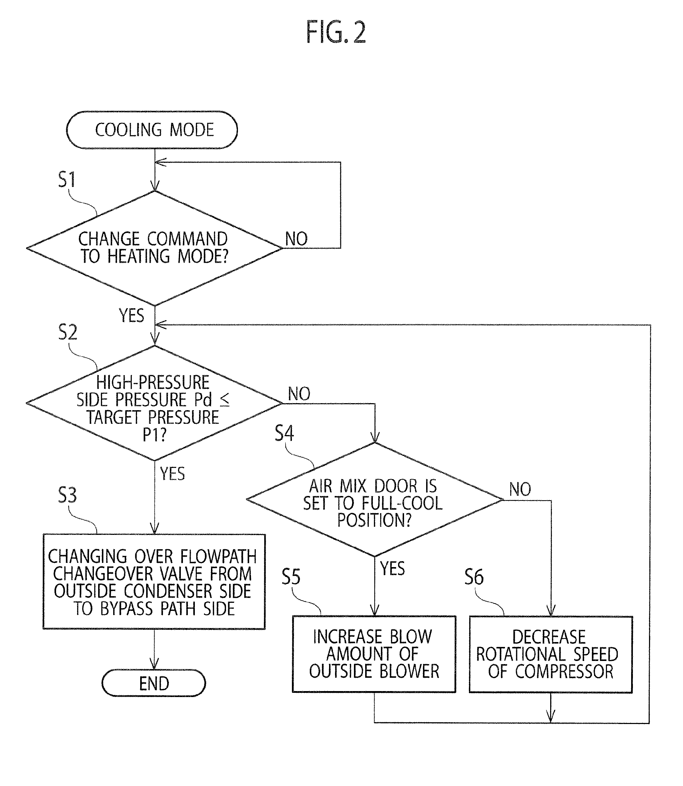

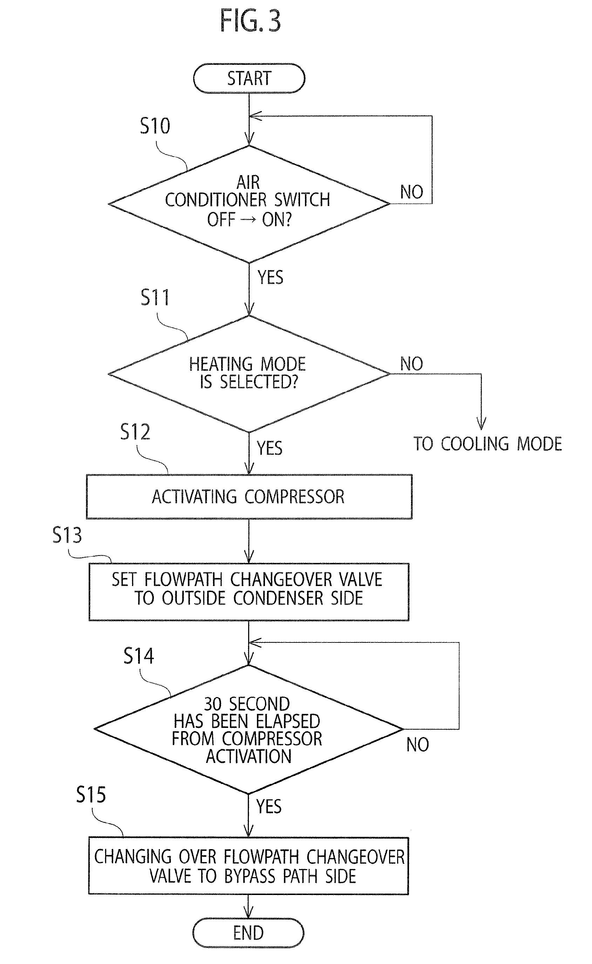

The controller 20 controls the compressor 3, the outside blower fan 21, the blower fan 22, the flowpath changeover valve 12, the air mix door 24 and so on, based on input data from the high-pressure detector 30, an operational panel 31 and so on. When an air conditioning switch (not shown) on the operational panel 31 is turned on, the controller 20, basically, operates the refrigeration cycle 2A by use of the cooling circulation path in the cooling mode, and operates the refrigeration cycle 2A by use of the heating circulation path in the heating mode. However, when the heating mode is selected during the cooling mode, a control shown in a flowchart of Fig. 2 is executed. In addition, when activation with the heating mode is commanded, a control shown in a flowchart of Fig. 3 is executed. The controls shown in Figs. 2 and 3 will be explained after explaining a fundamental operation.

Subsequently, an operation of the above-explained air conditioner 1A will be explained. In the cooling mode, the flowpath changeover valve 12 is changed over to a side of the outside condenser 4. The refrigerant compressed by the compressor 3 circulates along the cooling circulation path passing through the interior condenser 6, the flowpath changeover valve 12, the outside condenser 4, the receiver tank 5, the thermostatic expansion valve 7, the evaporator 8 and the accumulator 9. The high-temperature and high-pressure refrigerant compressed by the compressor compressed by the compressor 3 radiates heat to air at the outside condenser 4 and the interior condenser 6, and absorbs heat from air at the evaporator 8. Therefore, air blowing through the A/C case 23 is cooled by the evaporator 8, and then partially or entirely reheated by the interior condenser 6. As a result, the desired-temperature cool air is supplied to the cabin.

In the heating mode, the flowpath changeover valve 12 is changed over to a side of the bypass path 11. The refrigerant compressed by the compressor 3 circulates along the heating circulation path passing through the interior condenser 6, the flowpath changeover valve 12, the bypass path 11, the thermostatic expansion valve 7, the evaporator 8 and the accumulator 9. The high-temperature and high-pressure refrigerant compressed by the compressor 3 radiates heat to air only at the interior condenser 6, and absorbs heat from air at the evaporator 8. Since heat is radiated only at the interior condenser 6 (not radiated at the outside condenser 4), larger heat energy is radiated at the interior condenser 6 than that by the cooling refrigerant circulation path. Therefore, air blowing through the A/C case 23 is once cooled by the evaporator 8, and then heated by the interior condenser 6. As a result, desired-temperature warm air is supplied to the cabin.

Next, a changeover operation from the cooling mode to the heating mode will be explained. As shown in Fig. 2, when a changeover command from the cooling mode to the heating mode is generated (YES in step S1), the controller 20 determines whether or not the high-pressure-side pressure Pd detected by the high-pressure detector 30 is equal-to or lower-than a target pressure P1 (step S2).

Here, the target pressure P1 is an estimated pressure by which, when the cooling circulation path is changed over to the heating circulation path, the refrigerant amount could be ensured appropriately after the refrigerant amount resided in the outside condenser 4 and so on (the residual refrigerant amount) is withheld. In other words, the target pressure P1 is a pressure by which the residual refrigerant amount in the outside condenser 4 and so on becomes an allowable maximum residual amount W2.

If the high-pressure-side pressure Pd is equal-to or lower-than the target pressure P1 (YES in step S2), the controller 20 immediately changes over the flowpath changeover valve 12 from the side of the outside condenser 4 to the side of the bypass path 11 (step S3). By this, the refrigeration path 2A is changed over to the heating circulation path, so that the mode is transferred to the heading mode. On the other hand, if the high-pressure-side pressure Pd is more than the target pressure P1 (NO in step S2), the controller 20 determines whether or not the air mix door 24 is set at a full-cool position (position shown by a double dotted dashed line in Fig. 1: position in which air cooled by the evaporator 8 is not reheated by the interior condenser 6) (step S4).

If the air mix door 24 is set at the full-cool position (YES in step S4), the controller 20 increases an air blow volume by the outside blower fan 21 (step S5). As a result, heat exchange at the outside condenser 4 is enhanced, so that the high-pressure-side pressure Pd gradually decreases. The process flow is returned to the step S2 after the step S5, and thereby it is determined whether or not the high-pressure-side pressure Pd is equal-to or lower-than the target pressure P1 (step S2). At a time when the gradually decreasing high-pressure-side pressure Pd becomes equal-to or lower-than the target pressure P1, the flowpath changeover valve 12 is changed over from the side of the outside condenser 4 to the side of the bypass path 11 (step S3), the refrigeration path 2A is changed over to the heating circulation path, and thereby the mode is transferred to the heading mode.

On the other hand, if the air mix door 24 is not set at the full-cool position (NO in step S4), the controller 20 decreases a rotational speed of the compressor 3 (step S6). As a result, the high-pressure-side pressure Pd gradually decreases. The process flow is returned to the step S2 after the step S5, and thereby it is determined whether or not the high-pressure-side pressure Pd is equal-to or lower-than the target pressure P1 (step S2). At a time when the gradually decreasing high-pressure-side pressure Pd becomes equal-to or lower-than the target pressure P1, the flowpath changeover valve 12 is changed over from the side of the outside condenser 4 to the side of the bypass path 11 (step S3), the refrigeration path 2A is changed over to the heating circulation path, and thereby the mode is transferred to the heading mode.

As explained above, when changing over from the cooling mode to the heating mode, the flowpath is changed over to the heating circulation path after the high-pressure-side pressure Pd of the refrigeration cycle 2A has become equal-to or lower-than the target pressure P1. The reason will be explained hereinafter.

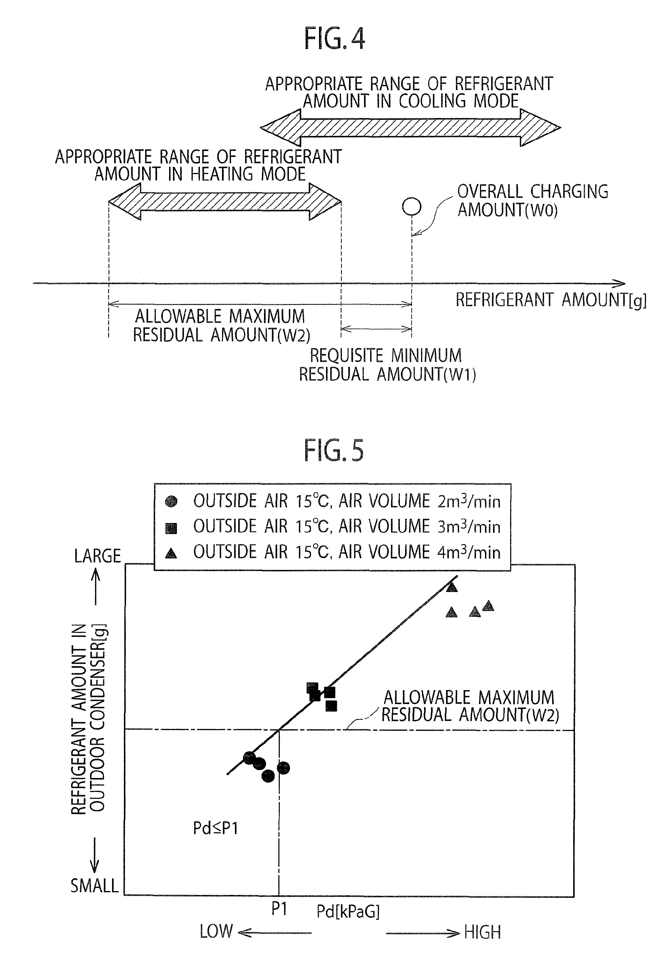

The capacity of the outside condenser 4 is made extremely larger than the capacity of the evaporator (interior heat exchanger) 8 and the capacity of the interior condenser (interior heat exchanger) 6 in order to get sufficient heat radiation performance (cooling performance) in a high temperature state. Therefore, as shown in Fig. 4, appropriate ranges of the refrigerant amount in the cooling mode (the cooking circulation path is used) and the heating mode (the heating circulation path is used) are extremely different from each other. Therefore, if the mode is changed over from the cooling mode to the heating mode under a condition where a large amount of the refrigerant resides in the outside condenser 4 and so on, there is a possibility that the refrigerant may become short.

On the other hand, there is correlation between the high-pressure-side pressure Pd of the refrigeration cycle 2A and the refrigerant amount resided in the outside condenser 4 and so on (in detail, the refrigerant amount in an entire of the circulation path when the refrigerant is not circulated along the heating circulation path), so that a characteristic diagram shown in Fig. 5 can be provided. Therefore, it can become enable to circulates an appropriate amount of the refrigerant for using the heating circulation path by changing over the flowpath from the cooling circulation path to the heating circulation path ata pressure equal-to or lower-than the target pressure P1 (an estimated pressure by which the refrigerant amount could be ensured appropriately after the refrigerant amount resided in the outside condenser 4 and so on (the residual refrigerant amount) is withheld). In other words, the refrigerant amount when using the heating circulation path can be optimized by controlling the high-pressure-side pressure Pd of the refrigeration cycle 2A upon changing over the mode from the cooling mode to the heating mode. A concrete method for setting the target pressure P1 will be explained later in detail.

Next, an operation in a case where activation with the heating mode is commanded will be explained. As shown in Fig. 3, when the air conditioning switch (not shown) on the operational panel 31 is turned on (YES in step S10), it is determined whether or not the heating mode is being selected (step S11). If the heating mode is being selected (YES in step S11), the compressor 3 is activated (step S12) and the flowpath changeover valve 12 is set to the side of the outside condenser 4 (step S13). In other words, even if the heating mode is being selected, the refrigeration cycle 2A is firstly operated by use of the cooling circulation path. Then, when thirty seconds has elapsed from the activation of the compressor 3 (YES in step S14), the flowpath changeover valve 12 is set to the side of the bypass path 11 (step S15) and the refrigeration cycle 2A is changed over from the cooling circulation path to the heating circulation path so that the heating operation starts.

As explained above, upon the activation command with the heating mode, the refrigeration cycle 2A is firstly operated with the cooling circulation path for a given time (thirty seconds), and then the refrigeration cycle 2A is changed over to the heating circulation path to start the heating operation. The reason will be explained hereinafter.

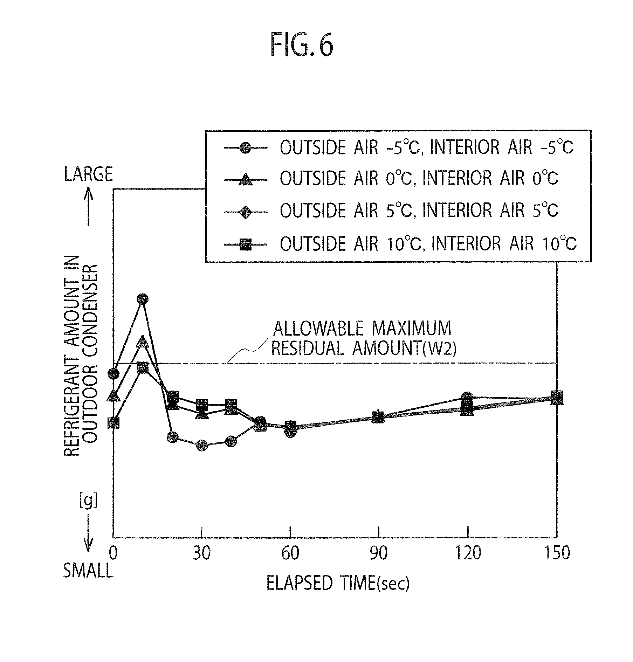

Fig. 6 shows measurement results of the refrigerant amount in the outside condenser 4 when activating with the cooling mode. As shown in Fig. 6, the residual refrigerant amount in the outside condenser 4 and so on once increases rapidly just after the activation with the cooling mode, then decreases rapidly and becomes equal-to or lower-than the allowable maximum residual amount W2. This characteristic is presented regardless of outside temperature and interior temperature. It is judged that it takes thirty seconds that the refrigerant amount in the outside condenser 4 surely becomes equal-to or lower-than the allowable maximum residual amount W2 after the activation with the cooling mode. Therefore, when the given time (thirty seconds) has elapsed after the activation with the cooling mode, the refrigerant amount in the outside condenser 4 surely decreases to the lower value than the allowable maximum residual amount W2. By utilizing this characteristic, the refrigerant amount when using the heating circulation path can be optimized.

As explained above, upon the changeover command to the heating mode during the cooling mode, the refrigerant circulation path is changed over from the cooling circulation path to the heating circulation path after the high-pressure-side pressure Pd detected by the high-pressure detector 30 becomes equal-to or lower-than the target pressure P1. Namely, there is the correlation between the high-pressure-side pressure Pd and the refrigerant amount resided in the outside condenser 4 and so on in the cooling mode, the cooling circulation path is changed over to the heating circulation path at a pressure equal-to or lower-than the target pressure P1 (an estimated pressure by which the refrigerant amount could be ensured appropriately after the residual refrigerant amount of the outside condenser 4 and so on is withheld). Therefore, it is not needed in the refrigeration cycle 2A to provide the conventional refrigerant return path or the like. As a result, the refrigerant amount in the heating circulation path can be optimized without making the refrigeration cycle 2A complicated and increasing its cost.

In addition, upon the changeover command to the heating mode during the cooling mode, the high-pressure-side pressure Pd detected by the high-pressure detector 30 and the target pressure P1 are compared with each other, and, if the high-pressure-side pressure Pd is higher than the target pressure P1, a pressure reduction control for reducing the high-pressure-side pressure Pd is executed. Therefore, the high-pressure-side pressure Pd can be reduced quickly to a pressure equal-to or lower-than the target pressure P1, so that the refrigerant amount in the heating circulation path can be quickly optimized.

In the pressure reduction control, the air blow volume to the outside condenser 4 is increased when the air mix door 24 is set to the full-cool position, but the refrigerant discharge volume of the compressor 3 is decreased when the air mix door 24 is not set to the full-cool position. Therefore, when the air mix door 24 is set to the full-cool position, a passenger can feel drive change of the compressor 3. On the other hand, when the air mix door 24 is not set to the full-cool position, a passenger hardly feels drive change of the compressor 3, and thereby no negative effect is given to the passenger.

Note that the pressure reduction control may be executed by increasing the air blow volume to the outside condenser 4 regardless of the position of the air mix door 24. According to this, the reduction of the high-pressure-side pressure Pd can be addressed by controlling the outside blower fan 21.

Alternatively, the pressure reduction control may be executed by decreasing the refrigerant discharge volume of the compressor 3 regardless of the position of the air mix door 24. According to this, the reduction of the high-pressure-side pressure Pd can be addressed by controlling the compressor 3. Note that, although the discharge volume of the compressor 3 is controlled by the rotational speed of the compressor 3 in the above embodiment, it may be controlled by an angle of a swash plate in a case of a swash plate compressor.

On the other hand, upon the activation command with the heating mode, the refrigerant amount resided in the outside condenser 4 and so on is changed to the given amount (an estimated amount by which the refrigerant amount could be ensured appropriately after the residual refrigerant amount of the outside condenser 4 and so on is withheld) by operating the cooling mode for the given time (thirty seconds) and then it is changed over to the heating operation. Therefore, also upon the activation command with the heating mode, the refrigerant amount in the heating circulation path can be surely optimized. Note that, although the given time is set to thirty seconds in the above embodiment, it may be determined appropriately according to a kind of the refrigeration cycle.

Further, although the thermostatic expansion valve 7 is used as the pressure reducer in the above embodiment, a pressure reducer that is controlled by the controller 20 may be used. In this case, the pressure reduction control may be executed by controlling, by the controller 20, a degree of pressure reduction by the pressure reducer. According to this, the reduction of the high-pressure-side pressure Pd can be addressed by controlling the pressure reducer.

Although the control for increasing the air blow volume to the outside condenser 4, the control for reducing the refrigerant discharge amount of the compressor 3, and the control for diminishing the pressure reduction degree of the pressure reducer are presented as examples of the pressure reduction control, the pressure reduction control may be another control if it can reduce the high-pressure-side pressure Pd. In addition, the pressure reduction control may be a control in which the controls presented above are executed concurrently.

### (Concrete method for setting target pressure P1)

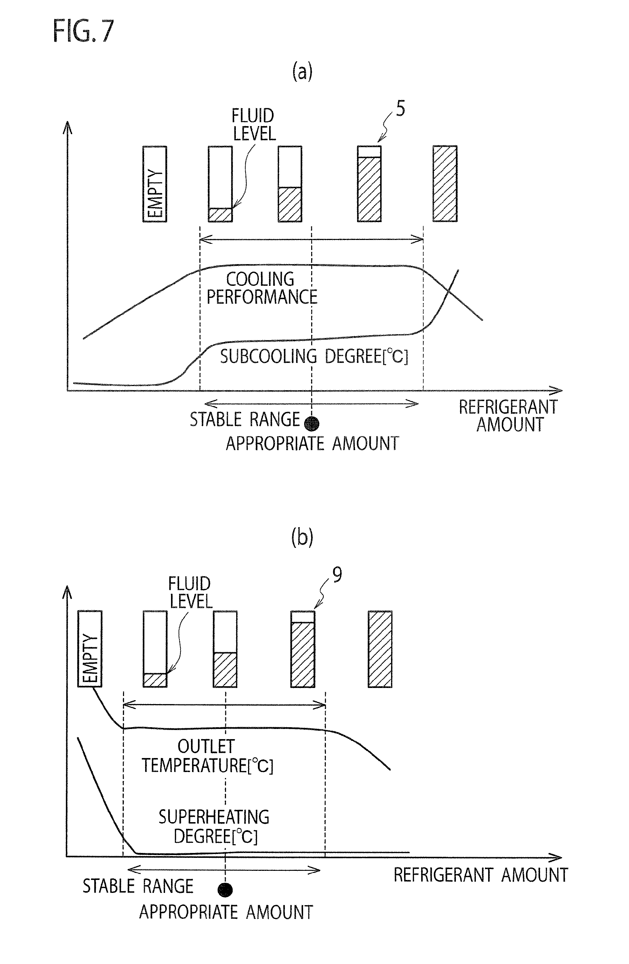

Firstly, a method for acquiring the appropriate refrigerant amounts in the cooling mode and the heating mode will be explained. In the cooling mode, the refrigerant circulates along the cooling circulation path, and the performance stabilizes to the extent that surplus refrigerant can be accumulated in the receiver tank 5. Therefore, as shown in Fig. 7(a), the appropriate refrigerant amount in the cooling mode is a median within the range in which a subcooling degree of the refrigerant on an outlet side of the outside condenser 4 is kept at a given value. Note that states of the receiver tank 5 are schematically presented at an upper portion in the Fig. 7(a).

On the other hand, in the heating mode, the refrigerant circulates along the heating circulation path, and the performance stabilizes to the extent that surplus refrigerant can be accumulated in the accumulator 9. Therefore, as shown in Fig. 7(b), the appropriate refrigerant amount in the heating mode is a median within the range in which a superheating degree of the refrigerant on an outlet side of the evaporator 8 is kept at a given value and also discharge refrigerant temperature of the compressor 3 is kept at a given value. Note that states of the accumulator 9 are schematically presented at an upper portion in the Fig. 7(b).

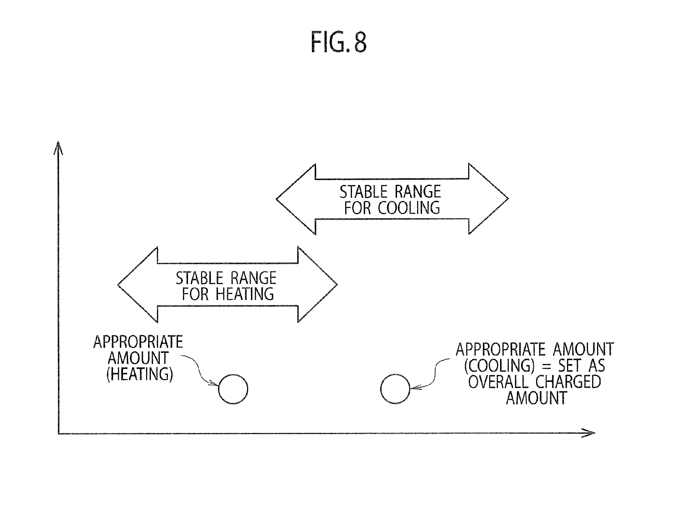

Next, a relation between an overall charged refrigerant amount in the refrigeration cycle 2A and the residual refrigerant amount in the outside condenser 4 will be explained. As explained above, the refrigerant amount (appropriate refrigerant range) for the stable cooling operation and the refrigerant amount (appropriate refrigerant range) for the stable heating operation are different from each other, so that, as shown in Fig. 8, the refrigerant amount for the stable cooling operation is larger and the refrigerant amount for the stable heating operation is smaller. In addition, the overall charged refrigerant amount WO in the refrigeration cycle 2A is desired to be as small as possible, therefore it is reasonably preferable that the overall charged refrigerant amount WO is set to the appropriate refrigerant amount for the cooling operation for which the refrigerant amount is large.

When changing over from the refrigerant circulation path to the heating circulation path, the refrigerant resided in the outside condenser 4 and so on still resides in the outside condenser 4 and so on (the residual refrigerant). Therefore, the residual refrigerant amount W is controlled so that the refrigerant amount (WO-W) obtained by subtracting the residual refrigerant amount W from the overall charged refrigerant amount WO stays in the appropriate amount range of the refrigerant when using the heating circulation path. Specifically, as shown in Fig. 4, the residual refrigerant amount W is controlled so as to be (WO-W2) ≤ W ≤ (WO-W1). Therefore, when changing over from the cooling mode to the heating mode, the high-pressure-side pressure Pd with which the residual refrigerant amount W of the outside condenser 4 and so on becomes the allowable maximum residual amount W2 is set as the target pressure P1 (see Fig. 5).

As indicated in the correlation graph shown in Fig. 5, the amount of the refrigerant resided in the outside condenser 4 and so on (the residual refrigerant amount) is proportional to the high-pressure-side pressure Pd, and the high-pressure-side pressure Pd that brings the residual refrigerant amount W = the allowable maximum residual amount W2 is set as the target pressure P1. Therefore, if the judgment formula Pd ≤ P1 used in the step S2 of the flowchart shown in Fig. 2 is met, W ≤ W2 (the residual refrigerant amount W is equal-to or lower-than the allowable maximum residual amount W2) is brought. Namely, a process to start the heating operation after changing over the refrigerant circulation path to the heating circulation path (bypass path) due to the affirmation of the step S2 is identical to a control to start the heating operation after the circulated refrigerant obtained by subtracting the residual refrigerant amount W (≤ the allowable maximum residual amount W2) from the overall charged refrigerant amount WO enters into the appropriate refrigerant amount range for the heating operation shown in Fig. 4.

### (Second Embodiment)

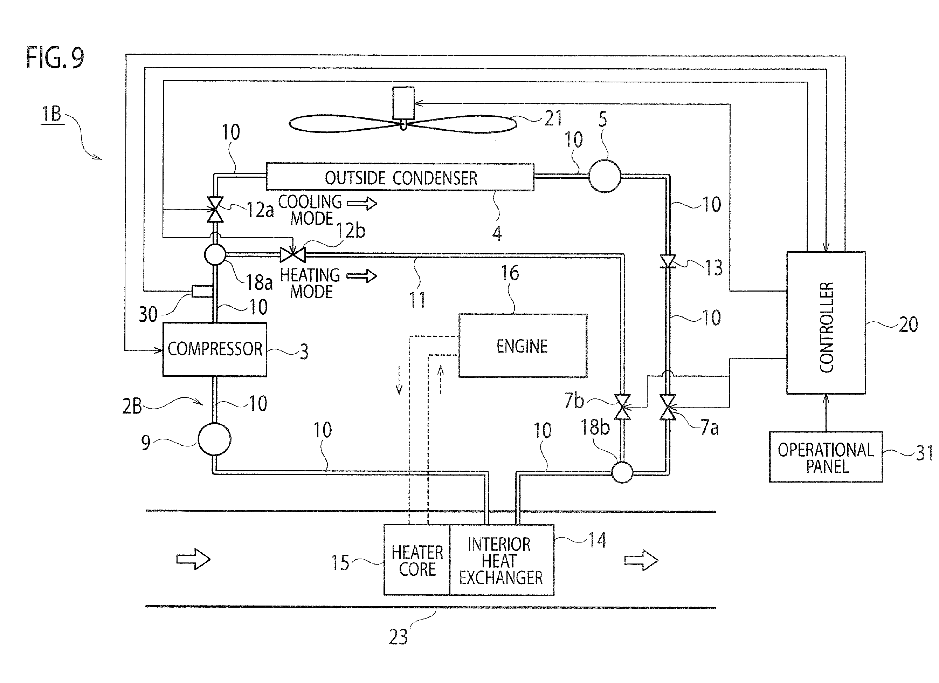

As shown in Fig. 9, an air conditioner 1B for a vehicle according to a second embodiment includes a vapor compression refrigeration cycle 2B that is different from the refrigeration cycle 2A in the first embodiment. The refrigeration cycle 2B includes a compressor 3 for compressing refrigerant, an outside condenser (outside heat exchanger) 4 for exchanging heat between refrigerant and outside air, a receiver tank 5 provided downstream from the outside condenser 4, a cooling pressure reducer 7a for decompressing the refrigerant, an interior heat exchanger 14 for exchanging heat between the refrigerant and air to be supplied to a vehicle cabin, and an accumulator 9 provided downstream from the interior heat exchanger 14, and these are connected by refrigerant pipes 10.

The compressor 3 is a vane compressor, for example, and its turning on/off and its rotational speed are controlled based on commands from a controller 20. A refrigerant discharge volume is regulated according to the rotational speed of the compressor 3.

Outside air is blown to the outside condenser 4 by an outside blower fan 21. Rotational speed of the outside blower fan 21 is regulated by the controller 20. Capacity of the outside condenser 4 is made extremely larger than capacity of the interior heat exchanger 14 in order to get sufficient heat radiation performance (cooling performance) in a high temperature state.

The interior heat exchanger 14 is housed in an A/C case 23 together with a heater core 15. Suctioned air into the A/C case 23 passes through the heater core 15 and the interior heat exchanger 14 so as to be adjusted to have desired temperature, and supplied into a vehicle cabin as desired-temperature conditioned air. The heater core 15 heats air by hot coolant heated by an engine 16.

Since the receiver tank 5 and the accumulator 9 are similar to those in the first embodiment, their explanations are omitted.

In addition, the refrigeration cycle 2B includes a bypass path 11 for letting the refrigerant supplied from the compressor 3 bypass the outside condenser 4 and the receiver tank 5, a heating pressure reducer 7b provided on the bypass path 11, a first open-close valve (flowpath changeover unit) 12a and a second open-close valve (flowpath changeover unit) 12b for changing over the refrigerant flow from the compressor 3 to the outside condenser 4 or to the bypass path 11, and a check valve 13. The first open-close valve 12a is provided on the refrigerant pipe 10 on an upstream side of the outside condenser 4. The second open-close valve 12b is provided on the bypass path 11. The check valve 13 is disposed downstream from the receiver tank 5 and upstream from a confluent position of the bypass path 11 and the refrigerant pipe 10. Note that pipe joints 18a and 18b in Fig. 9 connect the refrigerant pipes 10 and the bypass path 11.

When one of the first open-close valve 12a and the second open-close valve 12b is opened and another is closed, the refrigerant circulation path is changed over to a cooling circulation path passing through the outside condenser 4 (cooling refrigerant cycle) or a heating circulation path passing through the bypass path 11 (hot-gas heater cycle). Opening/closing of the first open-close valve 12a and the second open-close valve 12b is controlled by the controller 20. In addition, each of the cooling pressure reducer 7a and the heating pressure reducer 7b of present embodiment is an electronic expansion valve and its degree of pressure reduction is controlled by the controller 20.

In the cooling mode, low-temperature gas-liquid refrigerant in the outside heat exchanger 14 absorbs heat from air flowing in the A/C case 23, so that the outside heat exchanger 14 functions as an evaporator for generating cooled conditioned air. In addition, in the heating mode, high-temperature gas-liquid refrigerant in the outside heat exchanger 14 radiates heat to air flowing in the A/C case 23, so that the outside heat exchanger 14 functions as an interior condenser for generating heated conditioned air.

A high-pressure detector 30 is provided in the refrigeration cycle 2B. The high-pressure detector 30 detects a high-pressure-side pressure Pd of the refrigeration cycle 2B. The detected high-pressure-side pressure Pd is output to the controller 20.

The controller 20 controls the compressor 3, the cooling pressure reducer 7a, the heating pressure reducer 7b, the outside blower fan 21, the first open-close valve 12a, the second open-close valve 12b and so on, based on input data from the high-pressure detector 30, an operational panel 31 and so on. When an air conditioning switch (not shown) on the operational panel 31 is turned on, the controller 20, basically, operates the refrigeration cycle 2B by use of the cooling circulation path in the cooling mode, and operates the refrigeration cycle 2B by use of the heating circulation path in the heating mode.

However, when the heating mode is selected during the cooling mode, a control almost similar to that in the first embodiment is executed. But, an air mix door is not provided in the present embodiment. Therefore, as the pressure reduction control, any one of the control for increasing the air blow volume to the outside condenser 4, the control for reducing the refrigerant discharge amount of the compressor 3 and the control for diminishing the pressure reduction degree of the cooling pressure reducer 7a is executed. Note that the pressure reduction control may be another control than these controls even if it can reduce the high-pressure-side pressure Pd. In addition, the pressure reduction control may be a control in which the controls presented above are executed concurrently. In other words, if the step S2 of the flowchart shown in Fig. 2 is negated, a preliminarily determined pressure reduction control (e.g. step S5 or S6) is executed, and then the process flow returns to the step S2. On the other hand, when activation with the heating mode is commanded, a control similar to that in the first embodiment is executed. Detailed contents of the control are omitted in order to avoid redundant explanations.

Note that, also in the present embodiment, upon the changeover command to the heating mode during the cooling mode, the refrigerant circulation path is changed over from the cooling circulation path to the heating circulation path after the high-pressure-side pressure Pd detected by the high-pressure detector 30 becomes equal-to or lower-than the target pressure P1. Therefore, it is not needed in the refrigeration cycle 2B to provide the conventional refrigerant return path or the like. As a result, the refrigerant amount in the heating circulation path can be optimized without making the refrigeration cycle 2B complicated and increasing its cost.

In addition, upon the changeover command to the heating mode during the cooling mode, the high-pressure-side pressure Pd detected by the high-pressure detector 30 and the target pressure P1 are compared with each other, and, if the high-pressure-side pressure Pd is higher than the target pressure P1, a pressure reduction control for reducing the high-pressure-side pressure Pd is executed. Therefore, the high-pressure-side pressure Pd can be reduced quickly to a pressure equal-to or lower-than the target pressure P1, so that the refrigerant amount in the heating circulation path can be quickly optimized.

On the other hand, upon the activation command with the heating mode, the refrigerant amount resided in the outside condenser 4 and so on is changed to the given amount (an estimated amount by which the refrigerant amount could be ensured appropriately after the residual refrigerant amount of the outside condenser 4 and so on is withheld) by operating the cooling mode for the given time (thirty seconds) and then it is changed over to the heating operation. Therefore, also upon the activation command with the heating mode, the refrigerant amount in the heating circulation path can be surely optimized.

### (Others)

Note that the present invention can be applied to a refrigeration cycle other than the above first and second embodiments, even if it is a vapor compression refrigeration cycle that includes an outside heat exchanger for exchanging heat between refrigerant and outside air and an interior heat exchanger for exchanging heat between the refrigerant and air to be supplied to a vehicle cabin, and in which the refrigerant is circulated through the outside heat exchanger in its cooling mode and the refrigerant is circulated with bypassing the outside heat exchanger in its heating mode.

In addition, in the above first embodiment, a heater during the heating mode is only the interior condenser 6. However, the heater core 15 may be additionally installed similarly to the above second embodiment. The heater core 15 may have any types of structures.

## Claims

1. An air conditioner for a vehicle, comprising:
a refrigeration cycle that includes a compressor that compresses refrigerant, an outside heat exchanger that exchanges heat between refrigerant and outside air, an interior heat exchanger that exchanges heat between refrigerant and air to be supplied to a vehicle cabin, a pressure reducer that decompresses refrigerant compressed by the compressor, a bypass path that bypasses the outside heat exchanger, a cooling circulation path that circulates refrigerant compressed by the compressor through the outside heat exchanger, a heating circulation path that circulates refrigerant compressed by the compressor through the bypass path, and a flowpath changeover unit that changes over a refrigerant circulation path to one of the cooling circulation path and the heating circulation path;
a high-pressure detector that detects a high-pressure-side pressure of the refrigeration cycle; and
a controller operable to, upon a changeover command to a heating mode during a cooling mode, control the flowpath changeover unit so as to change over the refrigerant circulation path from the cooling circulation path to the heating circulation path after the high-pressure-side pressure detected by the high-pressure detector becomes equal-to or lower-than a target pressure.

2. The air conditioner according to claim 1, wherein
the controller is operable to, upon a changeover command to a heating mode during a cooling mode, compare the high-pressure-side pressure detected by the high-pressure detector with the target pressure and, when the high-pressure-side pressure is higher than the target pressure, execute a pressure reduction control for reducing the high-pressure-side pressure.

3. The air conditioner according to claim 2, wherein
the pressure reduction control is a control for increasing an air blow volume to the outside heat exchanger.

4. The air conditioner according to claim 2, wherein
the pressure reduction control is a control for reducing a refrigerant discharge amount of the compressor.

5. The air conditioner according to claim 2, wherein
the pressure reduction control is a control for diminishing a pressure reduction degree of the pressure reducer.

6. The air conditioner according to claim 2, wherein
the refrigeration cycle includes an interior condenser and an evaporator that are served as the interior heat exchanger, and an air mix door that adjusts a mixture degree of conditioned air cooled by the evaporator and conditioned air heated by the interior condenser, and
the pressure reduction control is a control for increasing an air blow volume to the outside heat exchanger when the air mix door is set to a full-cool position that achieves the mixture degree with as much as the conditioned air cooled by the evaporator, and a control for reducing a refrigerant discharge amount of the compressor when the air mix door is not positioned at the full-cool position.

7. The air conditioner according to any one of claims 1 to 6, wherein
the refrigeration cycle includes an outside condenser served as the outside heat exchanger, and an interior condenser and an evaporator that are served as the interior heat exchanger,
the cooling circulation path circulates refrigerant discharged from the compressor through the interior condenser, the outside condenser, the pressure reducer and the evaporator, and
the heating circulation path circulates refrigerant discharged from the compressor through the interior condenser, the bypass path, the pressure reducer and the evaporator.

8. The air conditioner according to any one of claims 1 to 6, wherein
the refrigeration cycle includes an outside condenser served as the outside heat exchanger, and the interior heat exchanger concurrently functions as an interior condenser and an evaporator,
the cooling circulation path circulates refrigerant discharged from the compressor through the outside condenser, the pressure reducer and the interior heat exchanger that functions as the evaporator, and
the heating circulation path circulates refrigerant discharged from the compressor through the bypass path, the pressure reducer and the interior heat exchanger that functions as the interior condenser.

9. The air conditioner according to any one of claims 1 to 8, wherein
the controller is operable to, upon an activation command with a heating mode, operate a cooling operation by use of the cooling circulation path for a given time, and then change over to a heating operation by use of the heating circulation path.

10. A method for changing over operations of an air conditioner for a vehicle,
the air conditioner including
a refrigeration cycle that includes a compressor that compresses refrigerant, an outside heat exchanger that exchanges heat between refrigerant and outside air, an interior heat exchanger that exchanges heat between refrigerant and air to be supplied to a vehicle cabin, a pressure reducer that decompresses refrigerant compressed by the compressor, a bypass path that bypasses the outside heat exchanger, a cooling circulation path that circulates refrigerant compressed by the compressor through the outside heat exchanger, a heating circulation path that circulates refrigerant compressed by the compressor through the bypass path, and a flowpath changeover unit that changes over a refrigerant circulation path to one of the cooling circulation path and the heating circulation path; and
a high-pressure detector that detects a high-pressure-side pressure of the refrigeration cycle,
the method comprising:
changing over, upon a changeover command to a heating mode during a cooling mode, the refrigerant circulation path from the cooling circulation path to the heating circulation path by the flowpath changeover unit after the high-pressure-side pressure detected by the high-pressure detector becomes equal-to or lower-than a target pressure.

11. The method for changing over operations of the air conditioner according to claim 10, further comprising:
comparing, upon a changeover command to a heating mode during a cooling mode, the high-pressure-side pressure detected by the high-pressure detector with the target pressure;
executing a pressure reduction control for reducing the high-pressure-side pressure when the high-pressure-side pressure is higher than the target pressure; and
changing over the refrigerant circulation path from the cooling circulation path to the heating circulation path by the flowpath changeover unit after the high-pressure-side pressure becomes equal-to or lower-than a target pressure.

12. The method for changing over operations of the air conditioner according to claim 11, wherein
the pressure reduction control is a control for increasing an air blow volume to the outside heat exchanger.

13. The method for changing over operations of the air conditioner according to claim 11, wherein
the pressure reduction control is a control for reducing a refrigerant discharge amount of the compressor.

14. The method for changing over operations of the air conditioner according to claim 11, wherein
the pressure reduction control is a control for diminishing a pressure reduction degree of the pressure reducer.

15. The method for changing over operations of the air conditioner according to claim 11, wherein
the refrigeration cycle includes an interior condenser and an evaporator that are served as the interior heat exchanger, and an air mix door that adjusts a mixture degree of conditioned air cooled by the evaporator and conditioned air heated by the interior condenser, and
the pressure reduction control is a control for increasing an air blow volume to the outside heat exchanger when the air mix door is set to a full-cool position that achieves the mixture degree with as much as the conditioned air cooled by the evaporator, and a control for reducing a refrigerant discharge amount of the compressor when the air mix door is not positioned at the full-cool position.

16. The method for changing over operations of the air conditioner according to any one of claims 10 to 15, wherein
the refrigeration cycle includes an outside condenser served as the outside heat exchanger, and an interior condenser and an evaporator that are served as the interior heat exchanger,
the cooling circulation path circulates refrigerant discharged from the compressor through the interior condenser, the outside condenser, the pressure reducer and the evaporator, and
the heating circulation path circulates refrigerant discharged from the compressor through the interior condenser, the bypass path, the pressure reducer and the evaporator.

17. The method for changing over operations of the air conditioner according to any one of claims 10 to 15, wherein
the refrigeration cycle includes an outside condenser served as the outside heat exchanger, and the interior heat exchanger concurrently functions as an interior condenser and an evaporator,
the cooling circulation path circulates refrigerant discharged from the compressor through the outside condenser, the pressure reducer and the interior heat exchanger that functions as the evaporator, and
the heating circulation path circulates refrigerant discharged from the compressor through the bypass path, the pressure reducer and the interior heat exchanger that functions as the interior condenser.

18. The method for changing over operations of the air conditioner according to any one of claims 10 to 15, further comprising:
operating, upon an activation command with a heating mode, a cooling operation by use of the cooling circulation path for a given time, and then changing over to a heating operation by use of the heating circulation path.
